# EUROPÄISCHE PATENTSCHRIFT

(11) **EP 1 477 345 B1**
(45) Veröffentlichungstag und Bekanntmachung des Hinweises auf die Patenterteilung: **28.04.2010**
(21) Anmeldenummer: 04010755.9
(22) Anmeldetag: 06.05.2004
(51) Int. Cl.: B60H 1/00

(54) **Klimaanlage**
Air conditioning device
Dispositif de climatisation

(30) Priorität: 12.05.2003 DE 10321393
(43) Veröffentlichungstag der Anmeldung: 17.11.2004
(73) Patentinhaber: Behr GmbH & Co. KG, 70469 Stuttgart (DE)
(72) Erfinder: Koukouravas, Evripidis, 72654 Neckartenzlingen (DE)
(74) Vertreter: Grauel, Andreas

(56) Entgegenhaltungen:
- EP-A- 1 076 197
- DE-A- 19 717 333
- FR-A- 2 480 892
- US-A- 4 369 978

## Beschreibung

Die Erfindung betrifft eine Klimaanlage, insbesondere für ein Kraftfahrzeug, gemäß dem Oberbegriff des Anspruchs 1.

Üblicherweise werden der Klimatrakt und der zugehörige Gebläsetrakt einer Klimaanlage eines Fahrzeugs getrennt geliefert. Bei der Cockpitvormontage wird der Klimatrakt an einem Querträger des Fahrzeugs festgeschraubt. Dabei hat eine Abdichtung gegen eine Wand zu erfolgen, wobei erhebliche Toleranzen zu berücksichtigen sind. Ein wesentliches Problem hierbei ist, dass der Klimatrakt nicht direkt an die Wand angeschraubt werden darf. Bei der Montage wird anschließend der Gebläsetrakt von außen, das heißt von der Seite des Wasserabscheidungskasten (Luftsammler), gegen die Wand geschraubt. Auf Grund der großen auftretenden Toleranzen kommt es häufig zu undichten Stellen sowie einem Versatz bei der Luftführung vom Gebläsetrakt zum Klimatrakt. Nachteilig ist ferner, dass in aller Regel zwei Dichtungen erforderlich sind, nämlich eine zwischen dem Klimatrakt und der Wand und eine zweite zwischen der Wand und dem Gebläsetrakt.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage, insbesondere für ein Kraftfahrzeug, mit einem Klimatrakt (2; 12) und einem Gebläsetrakt (3; 13), welche von einer Wand (4) mit einer Öffnung (7) voneinander getrennt sind dadurch gebildet, dass, zwischen dem Klimatrakt (2; 12), dem Gebläsetrakt (3, 13) und der Wand (4) eine Dichtung (5; 15) vorgesehen ist, die mit einem Bereich durch die Öffnung (7) in der Wand (4) ragt, wobei die Dichtung (5; 15) am vom Klimatrakt (2; 12) beabstandeten Ende einen umlaufenden Dichtungsrand (6) aufweist, dessen Außenabmessungen größer als die der Öffnung (7) in der Wand (4) sind und die Öffnung (7) einen umlaufenden Rand (8) aufweist, der in Richtung des Gebläsetrakts (3) ragt, wobei die Dichtung (5) diesen Rand (8) vollständig umschließt, wobei der Dichtungsrand der Dichtung (5; 15) mit Hilfe des Gebläsetrakts (3; 13) an der Wand (4) befestigt ist.

Durch eine derartige Dichtung, die durch die Öffnung in der Wand ragt, sind keine zwei Dichtungen für innen und außen erforderlich, das heißt, eine Dichtung wird eingespart.

Bevorzugt ist die Dichtung faltenbalgartig ausgebildet. Dies ermöglicht größere Herstellungstoleranzen für die einzelnen Bauteile in Hinblick auf deren Montage aneinander.

Vorzugsweise ist die Öffnung mit einem umlaufenden Rand versehen, der in Richtung des Gebläsetrakts ragt, wobei die Dichtung, das heißt vorzugsweise ein entsprechend ausgebildeter Dichtungsrand, diesen Rand vollständig umschließt.

Die Dichtung besteht bevorzugt aus einem thermoplastischen Elastomer (TPE) oder einem Ethylen/Propylen-Dien-Terpolymer (EPDM).

Bevorzugt ist die Dichtung mit Hilfe des Gebläsegehäuses, an der Wand außenseitig, das heißt motorraumseitig, befestigt.

Im Folgenden wird die Erfindung anhand zweier Ausführungsbeispiele unter Bezugnahme auf die Zeichnung im Einzelnen erläutert. In der Zeichnung zeigen:
- Fig. 1: einen ausschnittsweise dargestellten Schnitt durch einen Teil einer Klimaanlage gemäß dem ersten Ausführungsbeispiel, und
- Fig. 2: einen ausschnittsweise dargestellten Schnitt durch einen Teil einer Klimaanlage gemäß dem zweiten Ausführungsbeispiel.

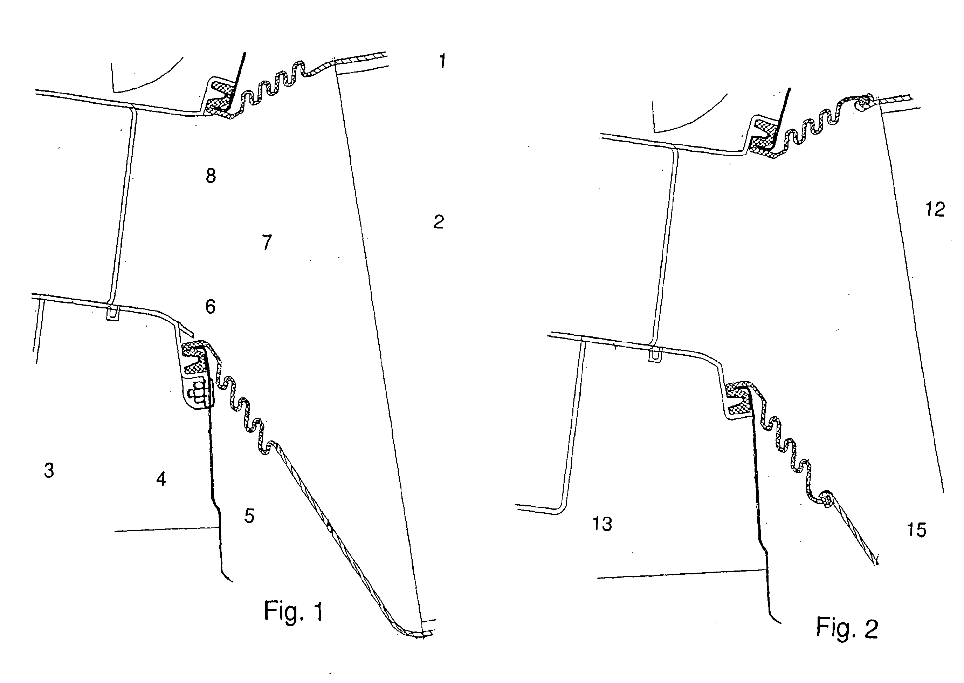

Eine erfindungsgemäße Klimaanlage 1 weist einen Klimatrakt 2, wobei vorliegend nur das Verteilergehäuse in Fig. 1 dargestellt ist, und einen Gebläsetrakt 3 auf. Der Klimatrakt 2 ist an einem Querträger eines Kraftfahrzeugs fest angeschraubt (nicht dargestellt) und der Gebläsetrakt ist an einer Wand 4 mittels Schrauben angeschraubt.

Zur Abdichtung zwischen dem Klimatrakt 2, der Wand 4 und dem Gebläsetrakt 3 ist eine Dichtung 5 vorgesehen, welche faltenbalgartig ausgebildet ist, wodurch sie flexibel anpassbar ist und eine große Fertigungs/Montagetoleranz für den Klimatrakt 2 zulässt. Gemäß dem ersten Ausführungsbeispiel ist die Dichtung 5 einstückig mit dem Verteilergehäuse des Klimatrakts 2 ausgebildet. Dies kann beispielsweise mittels 2-Komponenten-Spritzgießen erfolgen. Vorliegend besteht das Verteilergehäuse aus Polypropylen (PP) und die Dichtung 5 aus einem thermoplastischen Elastomer. In Folge der einstückigen Ausgestaltung ist ein Rand der Dichtung 5 direkt mit dem Verteilergehäuse verbunden. Der andere Rand der Dichtung 5, im Folgenden als Dichtungsrand 6 bezeichnet, ist durch eine Öffnung 7 in der Wand 4 geführt. Hierbei hat der Dichtungsrand 6 größere Abmessungen als die Öffnung 7, so dass er zwischen dem Gebläsegehäuse des Gebläsetrakts 3 und der Außenseite der Wand 4 fest eingeklemmt werden kann.

Die Wand 4 ist mit einem umlaufenden Rand 8 versehen, der in Richtung des Gebläsetrakts 3 ragt, wobei die Dichtung 5 diesen Rand 8 vollständig umschließt und wieder auf der gebläsetraktseitigen Seite der Wand 4 anliegt, das heißt die Dichtung 5 hintergreift den Rand 8.

Gemäß dem in Fig. 2 dargestellten zweiten Ausführungsbeispiel, welches dem ersten Ausführungsbeispiel im Wesentlichen entspricht, sind gleiche oder gleichwirkende Elemente mit um 10 größeren Bezugszeichen versehen. Einziger wesentlicher Unterschied zum ersten Ausführungsbeispiel ist, dass die Dichtung 15, die aus einem Spritzgussteil aus einem Ethylen/Propylen-Dien-Terpolymer besteht, getrennt vom Klimatrakt 12 ausgebildet ist. Die Verbindung zwischen dem Klimatrakt 12 und der Dichtung 15 ist kederartig ausgebildet, jedoch sind beliebige andere Verbindungen möglich. Auch gemäß diesem Ausführungsbeispiel erfolgt ein Einklemmen der Dichtung 15 mit Hilfe des mittels Schrauben befestigten Gebläsetrakts 13.

### Bezugszeichenliste

- 1: Klimaanlage
- 2, 12: Klimatrakt
- 3,13: Gebläsetrakt
- 4: Wand
- 5,15: Dichtung
- 6: Dichtungsrand
- 7: Öffnung
- 8: Rand

## Patentansprüche

1. Klimaanlage, insbesondere für ein Kraftfahrzeug, mit einem Klimatrakt (2; 12) und einem Gebläsetrakt (3; 13), welche von einer Wand (4) mit einer Öffnung (7) voneinander getrennt sind **dadurch gekennzeichnet, dass** zwischen dem Klimatrakt (2; 12), dem Gebläsetrakt (3, 13)
und der Wand (4) eine Dichtung (5; 15) vorgesehen ist, die mit einem Bereich durch die Öffnung (7) in der Wand (4) ragt,
wobei die Dichtung (5; 15) am vom Klimatrakt (2: 12) beabstandeten Ende einen umlaufenden Dichtungsrand (6) aufweist, dessen Außenabmessungen größer als die der Öffnung (7) in der Wand (4) sind und die Öffnung (7) einen umlaufenden Rand (8) aufweist, der in Richtung des Gebläsetrakts (3) ragt, wobei die Dichtung (5) diesen Rand (8) vollständig umschließt, wobei der Dichtungsrand der Dichtung (5; 15) mit Hilfe des Gebläsetrakts (3; 13) an der Wand (4) befestigt ist.

2. Klimaanlage nach Anspruch 1, **dadurch gekennzeichnet, dass** die Dichtung (5; 15) faltenbalgartig ausgebildet ist.

3. Klimaanlage nach einem der vorhergehenden Ansprüche, **dadurch gekennzeichnet, dass** die Dichtung (15) als separates Teil ausgebildet ist.

4. Klimaanlage nach einem der Ansprüche 1 bis 2, **dadurch gekennzeichnet, dass** die Dichtung (5) Bestandteil des Klimatrakts (2) ist.

5. Klimaanlage nach Anspruch 4, **dadurch gekennzeichnet, dass** die Dichtung (5) als Anschlussstück des Klimatraks (2) mittels 2-Komponenten-Technik gefertigt ist.

6. Klimaanlage nach einem der vorhergehenden Ansprüche, **dadurch gekennzeichnet, dass** die Dichtung (5; 15) aus einem thermoplastischen Elastomer oder einem Ethylen/Propylen-Dien-Terpolymer besteht.

7. Klimaanlage nach einem der vorhergehenden Ansprüche, **dadurch gekennzeichnet, dass** der Klimatrakt (2; 12) an einem Querträger des Kraftfahrzeugs befestigt ist.

## Claims

1. Air conditioning system, in particular for a motor vehicle, comprising an air conditioning section (2; 12) and a fan section (3; 13) separated from each other by a wall (4) with an opening (7), **characterised in that** a seal (5;15) partially projecting through the opening (7) in the wall (4) is provided between the air conditioning section (2; 12), the fan section (3; 13) and the wall (4), wherein the end of the seal (5;15) which is remote from the air conditioning section (2; 12) has a continuous seal edge (6) with external dimensions larger than those of the opening (7) in the wall (4) and the opening (7) has a continuous edge (8) which extends towards the fan section (3), the seal (5) completely enclosing the edge (8) and the seal edge of the seal (5; 15) being attached to the wall (4) with the aid of the fan section (3; 13).

2. Air conditioning system according to claim 1, **characterised in that** the seal (5; 15) is designed as a bellows.

3. Air conditioning system according to any of the preceding claims, **characterised in that** the seal (15) is designed as a separate part.

4. Air conditioning system according to claim 1 or 2, **characterised in that** the seal (5) is a part of the air conditioning section (2).

5. Air conditioning system according to claim 4, **characterised in that** the seal (5) is produced as a connecting piece of the air conditioning section (2) by means of 2-component technology.

6. Air conditioning system according to any of the preceding claims, **characterised in that** the seal (5; 15) is made of a thermoplastic elastomer or of an ethylenepropylene-diene terpolymer.

7. Air conditioning system according to any of the preceding claims, **characterised in that** the air conditioning section (2; 12) is mounted on a crossmember of the motor vehicle.

## Revendications

1. Système de climatisation, en particulier pour un véhicule automobile, comprenant un ensemble formant climatiseur (2 ; 12) et un ensemble formant soufflante (3 ; 13) qui sont séparés l'un de l'autre par une paroi (4) comportant une ouverture (7),
**caractérisé en ce qu'**il est prévu un joint d'étanchéité (5 ; 15) entre l'ensemble formant climatiseur (2 ; 12), l'ensemble formant soufflante (3 ; 13), et la paroi (4), joint d'étanchéité qui, par une zone, pénètre dans la paroi (4), à travers l'ouverture (7), où le joint d'étanchéité (5 ; 15) présente, au niveau de l'extrémité espacée de l'ensemble formant climatiseur (2 ; 12), un bord d'étanchéité circulaire (6) dont les dimensions extérieures sont supérieures à celles de l'ouverture (7) située dans la paroi (4), et l'ouverture (7) présente un bord circulaire (8) qui dépasse en direction de l'ensemble formant soufflante (3), où le joint d'étanchéité (5) entoure complètement ce bord (8), où le bord du joint d'étanchéité (5 ; 15) est fixé sur la paroi (4) à l'aide de l'ensemble formant soufflante (3 ; 13).

2. Système de climatisation selon la revendication 1, **caractérisé en ce que** le joint d'étanchéité (5 ; 15) est configuré en forme de soufflet.

3. Système de climatisation selon l'une ou l'autre des revendications précédentes, **caractérisé en ce que** le joint d'étanchéité (15) est configuré comme une pièce distincte.

4. Système de climatisation selon l'une des revendications 1 ou 2, **caractérisé en ce que** le joint d'étanchéité (5) fait partie de l'ensemble formant climatiseur (2).

5. Système de climatisation selon la revendication 4,
**caractérisé en ce que** le joint d'étanchéité (5), en tant que pièce de raccordement de l'ensemble formant climatiseur (2), est fabriqué au moyen d'une technique à 2 composants.

6. Système de climatisation selon l'une quelconque des revendications précédentes, **caractérisé en ce que** le joint d'étanchéité (5 ; 15) se compose d'un élastomère thermoplastique ou d'un terpolymère d'éthylène-propylène-diène.

7. Système de climatisation selon l'une quelconque des revendications précédentes, **caractérisé en ce que** l'ensemble formant climatiseur (2 ; 12) est fixé sur une traverse du véhicule automobile.
